(19) Europäisches Patentamt
European Patent Office
Office européen des brevets

(11) **EP 3 764 283 B1**

(12) **FASCICULE DE BREVET EUROPEEN**

(45) Date de publication et mention
de la délivrance du brevet:
**19.11.2025 Bulletin 2025/47**

(21) Numéro de dépôt: **20183302.7**

(22) Date de dépôt: **30.06.2020**

(51) Classification Internationale des Brevets (IPC):
***G06V 10/50*** *(2022.01)*

(52) Classification Coopérative des Brevets (CPC):
**G06V 10/50; G06N 3/0464**

(54) **SYSTÈME ET PROCÉDÉ DE GÉNÉRATION DE DESCRIPTEURS D'UNE SCÈNE**

SYSTEM UND VERFAHREN ZUR ERZEUGUNG VON DESKRIPTOREN EINER SZENE

SYSTEM AND METHOD FOR GENERATING DESCRIPTORS OF A SCENE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **09.07.2019 FR 1907662**

(43) Date de publication de la demande:
**13.01.2021 Bulletin 2021/02**

(73) Titulaire: **Commissariat à l'Energie Atomique et aux Energies Alternatives
75015 Paris (FR)**

(72) Inventeurs:
• **VERDANT, Arnaud**
**38054 GRENOBLE CEDEX 9 (FR)**
• **GUICQUERO, William**
**38054 GRENOBLE CEDEX 9 (FR)**

(74) Mandataire: **Cabinet Beaumont
4, Place Robert Schuman
B.P. 1529
38025 Grenoble Cedex 1 (FR)**

(56) Documents cités:
**EP-A1- 3 428 851        US-A1- 2013 163 870
US-A1- 2015 092 982**

**Description**

Domaine technique

La présente description concerne de façon générale le domaine du traitement d'images, et vise plus particulièrement un système et un procédé pour générer des descripteurs d'une scène captée par un capteur d'images.

Technique antérieure

Dans le domaine du traitement d'images, il existe de nombreuses applications dans lesquelles on génère des descripteurs permettant de mettre en exergue des informations d'intérêt dans l'image, par exemple en vue de détecter des éléments prédéterminés dans l'image et/ou pour mettre en oeuvre des opérations de classification.

On s'intéresse ici plus particulièrement à la génération de descripteurs dans un capteur adapté, lors d'une phase d'acquisition, à fournir successivement une pluralité de plans image binaires, par exemple un capteur du type décrit dans les demandes de brevet EP3319311 et US20180124348 précédemment déposées par le demandeur.

La demande de brevet EP3428851 décrit un exemple de procédé de traitement d'une image.

Résumé de l'invention

L'invention est définie dans les revendications annexées.

Brève description des dessins

Ces caractéristiques et leurs avantages, ainsi que d'autres, seront exposés en détail dans la description suivante de modes de réalisation particuliers faite à titre non limitatif en relation avec les figures jointes parmi lesquelles :

la figure 1 représente de façon schématique un exemple d'un capteur d'images adapté, lors d'une phase d'acquisition, à fournir une pluralité de plans image binaires successifs ;

la figure 2 représente de façon schématique un exemple d'un système de génération de descripteurs selon un mode de réalisation ;

la figure 3 représente de façon schématique un exemple d'un procédé de génération de descripteurs selon un mode de réalisation ; et

la figure 4 illustre plus en détail un exemple de mise en oeuvre d'une étape du procédé de la figure 3.

Description des modes de réalisation

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques.

Par souci de clarté, seuls les étapes et éléments utiles à la compréhension des modes de réalisation décrits ont été représentés et sont détaillés. En particulier, la présente description concerne essentiellement un système et un procédé pour générer des descripteurs d'une scène captée par un capteur d'images. Les utilisations qui peuvent être faites de tels descripteurs et les diverses possibilités de paramétrage de ces descripteurs n'ont pas été détaillées, les modes de réalisation décrits étant compatibles avec toutes ou la plupart des applications connues utilisant des descripteurs d'image, par exemple pour des applications de détection automatique d'un élément dans une image, et le paramétrage des descripteurs en fonction de l'application considérée étant à la portée de l'homme du métier.

Par ailleurs, dans les exemples décrits ci-après, la réalisation des circuits internes des capteurs d'images, et notamment des pixels et des circuits périphériques de contrôle et de lecture, n'a pas été détaillée. De plus, la réalisation d'un circuit de traitement adapté à mettre en oeuvre le procédé de génération de descripteurs proposé n'a pas été détaillée, la réalisation d'un tel circuit étant à la portée de la personne du métier à partir des indications de la présente description. On notera que le circuit de traitement peut être partiellement ou totalement intégré dans la même puce semiconductrice que le capteur d'images, ou être intégré dans une puce semiconductrice externe au capteur d'images.

Sauf précision contraire, lorsque l'on fait référence à deux éléments connectés entre eux, cela signifie directement connectés sans éléments intermédiaires autres que des conducteurs, et lorsque l'on fait référence à deux éléments reliés ou couplés entre eux, cela signifie que ces deux éléments peuvent être connectés ou être reliés ou couplés par l'intermédiaire d'un ou plusieurs autres éléments.

Sauf précision contraire, les expressions "environ", "approximativement", "sensiblement", et "de l'ordre de" signifient à 10 % près, de préférence à 5 % près.

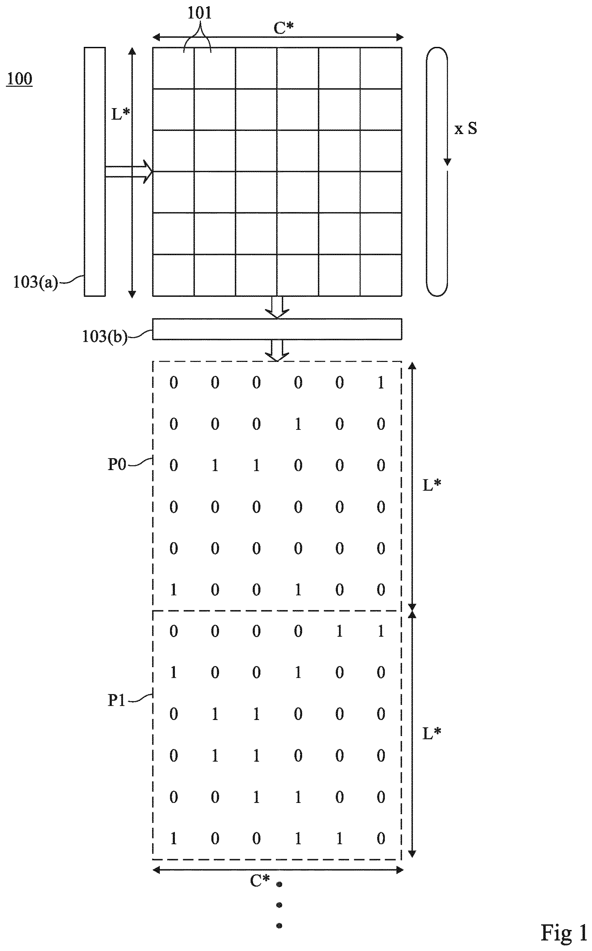

La figure 1 représente de façon très schématique un exemple d'un capteur d'images 100 adapté, lors d'une phase d'acquisition, à fournir une pluralité de plans image binaires successifs.

Le capteur de la figure 1 comprend une pluralité de pixels 101, par exemple identiques ou similaires, agencés en matrice selon L* lignes et C* colonnes, où L* et C* sont des entiers supérieurs ou égaux à 2. Chaque pixel 101 comprend par exemple une photodiode et un noeud de lecture (non détaillés sur la figure) et est adapté à fournir sur son noeud de lecture un signal de sortie, par exemple une tension, représentatif, d'une quantité d'énergie lumineuse reçue par la photodiode pendant une phase d'intégration du pixel. Le capteur comprend en outre un circuit de commande 103 configuré pour, lors d'une phase d'acquisition, sélectionner successivement chaque pixel 101 un nombre S de fois (avec S entier supérieur ou égal à 2) sans réinitialiser le noeud de lecture du pixel entre la première et la dernière sélection du pixel, et, à chaque sélection du pixel, comparer le signal de sortie du pixel à un seuil de quantification et fournir un échantillon binaire représentatif du résultat de la comparaison. La suite de S échantillons binaires ainsi obtenue constitue la valeur de sortie du pixel.

Sur la représentation de la figure 1, le circuit de commande 103 est divisé en un circuit de séquencement 103(a), adapté à sélectionner successivement les pixels, ligne par ligne, et un circuit de quantification sur 1 bit ou circuit de seuillage 103(b), adapté à comparer le signal de sortie de chaque pixel de la ligne sélectionnée à un seuil de quantification et à fournir un échantillon binaire de sortie représentatif du résultat de la comparaison.

Dans cet exemple, les lignes de pixels sont sélectionnées successivement selon un procédé de commande de type à obturation déroulante ("rolling shutter"). L'ensemble des lignes de pixels du capteur est parcouru successivement S fois. A chaque sélection d'une ligne de pixels, les pixels de la ligne sont quantifiés simultanément (en parallèle) par le circuit de quantification 103(b). A l'issue de chaque balayage de l'ensemble des L* lignes du capteur, on obtient un plan image binaire Ps de dimension C**L*, avec s entier allant de 1 à S. Chaque plan image binaire Ps comprend une unique valeur binaire par pixel. Sur la figure 1, deux plans image binaires successifs P0 et P1 ont été représentés à titre d'exemple illustratif.

A titre d'exemple, pour chaque pixel, les S sélections successives de chaque ligne de pixels sont réalisées au cours d'une même phase d'intégration de la ligne de pixels. Le seuil de quantification appliqué à chaque pixel de la ligne par le circuit 103(b) peut être constant tout au long de la phase d'intégration. Pour un pixel donné, la position de la transition entre l'état bas et l'état haut de la séquence binaire de sortie est représentative de l'intensité lumineuse reçue par le pixel pendant la phase d'intégration. L'intervalle de temps entre deux sélections successives de chaque ligne de pixels est par exemple sensiblement constant tout au long de la phase d'intégration de la ligne de pixels. A titre de variante, l'intervalle de temps entre deux sélections successives de chaque ligne de pixels varie au cours de la phase d'intégration de façon inversement proportionnelle au rang de la première des deux sélections parmi les S sélections successives de la ligne de pixels.

A titre de variante, les S sélections successives de chaque ligne de pixels sont réalisées non pas pendant la phase d'intégration des pixels de la ligne, mais au cours d'une phase de lecture suivant la phase d'intégration de la ligne de pixels. Le seuil de quantification appliqué à chaque pixel de la ligne par le circuit 103(b) peut alors varier de façon monotone tout au long de la phase de lecture.

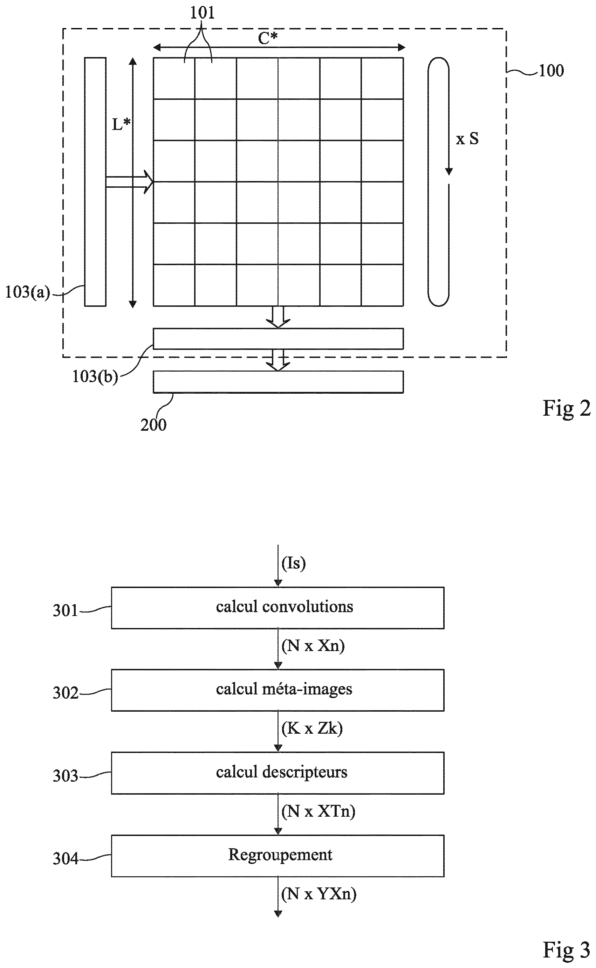

Des exemples plus détaillés de réalisation d'un capteur du type décrit en relation avec la figure 2 sont par exemple décrits dans les demandes de brevet EP3319311 et US20180124348 susmentionnées, dont le contenu est considéré comme faisant partie intégrante de la présente description.

La figure 2 représente de façon schématique un exemple d'un système de génération de descripteurs d'une scène selon un mode de réalisation.

Le système de la figure 2 comprend un capteur 100 du type décrit en relation avec la figure 1, configuré pour, lors d'une phase d'acquisition, fournir successivement une pluralité de plans image binaires comportant chacun une unique valeur binaire par pixel.

On cherche ici à générer, pour chaque plan image binaire Ps fourni par le capteur 100, une pluralité de descripteurs binaires permettant de mettre en exergue des informations d'intérêt dans l'image, par exemple en vue de détecter des éléments prédéterminés dans l'image et/ou pour mettre en oeuvre des opérations de classification.

Pour cela, le système de la figure 2 comprend un circuit électronique de traitement 200 adapté à traiter les plans image binaires Ps à la volée pour en extraire des descripteurs binaires. A titre d'exemple, le circuit de traitement 200 est adapté, à chaque acquisition d'un plan image binaire Ps et avant la fourniture du plan image binaire suivant, à mettre en oeuvre un procédé permettant d'extraire du plan image binaire Ps une pluralité de descripteurs binaires. Un tel traitement à la volée des plans image binaires peut notamment permettre de limiter les besoins en mémoire de stockage de données dans la mesure où il n'est alors pas nécessaire de mémoriser simultanément l'ensemble des S plans image binaires Ps pour générer les descripteurs.

La figure 3 représente schématiquement, sous forme de blocs, un exemple de procédé d'extraction de descripteurs binaires mis en oeuvre par le circuit de traitement 200 à chaque acquisition d'un plan image binaire Ps par le capteur 100.

Le procédé de traitement de la figure 3 peut être appliqué au plan image Ps complet, ou à une sous-image binaire constituée par une partie seulement des pixels du plan image Ps. A titre d'exemple, le plan image Ps est décomposé en plusieurs sous-image de mêmes dimensions, le procédé de traitement étant appliqué en parallèle aux différentes sous-images. Les différentes sous-images peuvent par exemple être constituées de pixels ayant des pas inter-pixels différents dans le plan image Ps. Ceci permet notamment de réaliser un même traitement (recherche d'élément prédéterminé, classification, etc.) à des échelles différentes dans le plan image Ps (traitement multi-échelles). En outre, le même traitement peut être appliqué plusieurs fois avec des paramètres différents à une même sous-image, par exemple en vue de rechercher différentes classes d'éléments prédéterminées dans une même sous-image (traitement multi-classes).

Un circuit de routage, non détaillé sur la figure 2, peut être disposé entre le circuit de quantification 103(b) et le circuit de traitement 200 pour fournir au circuit de traitement 200 la ou les sous-images binaires à traiter.

Pour la suite de la description, on considère qu'à chaque balayage de l'ensemble des L* lignes du capteur, le circuit de traitement 200 reçoit un plan image binaire Is de dimensions CxL correspondant au plan image binaire Ps complet (soit C=C* et L=L*), ou à une partie du plan image binaire Ps, C et L étant des entiers supérieurs ou égaux à 2 désignant respectivement le nombre de colonnes et le nombre de lignes du plan image binaire Is. En pratique, le circuit de traitement 200 peut être configuré pour, à chaque balayage de l'ensemble des L* lignes du capteur, recevoir et traiter en parallèle une pluralité de plans image binaires Is de dimensions CxL.

Le procédé de traitement de la figure 3 comprend une étape 301 de calcul de N convolutions du plan image binaire Is par respectivement N noyaux ou masques de convolution $\Omega n$ distincts, avec N entier supérieur ou égal à 2 et n entier allant de 1 à N, de façon à générer N images convoluées Xn. Les N noyaux de convolution $\Omega n$ ont de préférence tous les mêmes dimensions $C_\Omega x L_\Omega$. Les N images convoluées Xn ont alors toutes les mêmes dimensions C'xL', avec, par exemple (pour tenir compte des effets de bord), $C'=C-(C_\Omega-1)$ et $L'=L-(L_\Omega-1)$. De préférence, chacun des noyaux de convolution $\Omega n$ comprend uniquement des coefficients binaires (0 ou 1), ce qui permet de simplifier la mise en oeuvre des calculs de convolution par le circuit de traitement 200. La réalisation et l'optimisation d'un circuit adapté à la mise en oeuvre de ces opérations de convolution, de préférence à poids binaires, est à la portée de l'homme du métier.

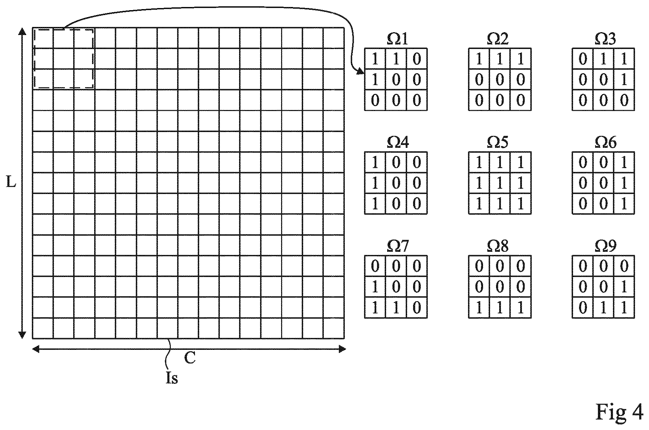

La figure 4 illustre plus en détail un exemple de mise en oeuvre de l'étape 301. Dans cet exemple, on calcule N=9 convolutions du plan image binaire Is, de façon à obtenir N images convoluées Xn=I*$\Omega n$. Les noyaux de convolution $\Omega n$ sont dans cet exemple de dimension $C_\Omega x L_\Omega=3x3$. Les noyaux de convolution $\Omega n$ sont par exemple définis comme suit :

[Math 1]

$$\Omega 1 = \begin{bmatrix} 1 & 1 & 0 \\ 1 & 0 & 0 \\ 0 & 0 & 0 \end{bmatrix}$$

[Math 2]

$$\Omega 2 = \begin{bmatrix} 1 & 1 & 1 \\ 0 & 0 & 0 \\ 0 & 0 & 0 \end{bmatrix}$$

[Math 3]

$$\Omega 3 = \begin{bmatrix} 0 & 1 & 1 \\ 0 & 0 & 1 \\ 0 & 0 & 0 \end{bmatrix}$$

[Math 4]

$$\Omega 4 = \begin{bmatrix} 1 & 0 & 0 \\ 1 & 0 & 0 \\ 1 & 0 & 0 \end{bmatrix}$$

[Math 5]

$$\Omega5 = \begin{bmatrix} 1 & 1 & 1 \\ 1 & 1 & 1 \\ 1 & 1 & 1 \end{bmatrix}$$

[Math 6]

$$\Omega6 = \begin{bmatrix} 0 & 0 & 1 \\ 0 & 0 & 1 \\ 0 & 0 & 1 \end{bmatrix}$$

[Math 7]

$$\Omega7 = \begin{bmatrix} 0 & 0 & 0 \\ 1 & 0 & 0 \\ 1 & 1 & 0 \end{bmatrix}$$

[Math 8]

$$\Omega8 = \begin{bmatrix} 0 & 0 & 0 \\ 0 & 0 & 0 \\ 1 & 1 & 1 \end{bmatrix}$$

[Math 9]

$$\Omega9 = \begin{bmatrix} 0 & 0 & 0 \\ 0 & 0 & 1 \\ 0 & 1 & 1 \end{bmatrix}$$

Dans cet exemple, les N images convoluées Xn obtenues à l'issue de l'étape 301 sont des images non binaires.

Le procédé de la figure 3 comprend en outre une étape 302 de génération de K méta-images ou images intermédiaires Zk à partir de l'ensemble des N images convoluées Xn calculées à l'étape 301, avec K entier supérieur ou égal à 1 et k entier allant de 1 à K.

Les K méta-images Zk calculées à l'étape 302 sont par exemple de mêmes dimensions C'xL'que les N images convoluées Xn calculées à l'étape 301. A titre d'exemple, pour chaque méta-image Zk, chaque valeur de pixel de la méta-image Zk est égale au résultat d'une fonction mathématique fk ayant pour entrées les N valeurs de pixels de même position dans les N images convoluées Xn. Les fonctions fk sont de préférence des fonctions statistiques, par exemple la moyenne, la médiane, le maximum, le minimum, l'écart type, etc.

A titre d'exemple, dans le cas où l'étape 301 est mise en oeuvre conformément à l'exemple de la figure 4, une unique méta-image Z1 peut être calculée à l'étape 302 (K=1), la fonction f1 étant définie comme suit :

[Math 10]

$$Z1(c', l') = f1(Xn(c', l')) = max(max(Xn\backslash 5(c', l')), 2)$$

Soit :

[Math 11]

$$Z1(c',l') = max(max(X1(c',l'), X2(c',l'), X3(c',l'), X4(c',l'),$$
$$X6(c',l'), X7(c',l'), X8(c',l'), X9(c',l')), 2)$$

Dans les équations Math 10 et Math 11 susmentionnées, c' est un entier allant de 1 à C', l' est un entier allant de 1 à L', $Z1(c',l')$ désigne la valeur du pixel de position c',l' dans la méta-image Z1, $Xn(c',l')$ désigne la valeur du pixel de position c', l' dans l'image Xn, et Xn\5 désigne l'ensemble des images Xn à l'exception de l'image X5 (n sauf 5).

Le procédé de la figure 3 comprend en outre une étape 303 de calcul, pour chacune des N images convoluées Xn calculées à l'étape 301, d'un descripteur binaire XTn, au moyen d'une fonction logique à sortie binaire ln prenant pour entrées l'image Xn et la ou les méta-images Zk calculées à l'étape 302. Les descripteurs XTn sont des plans binaires de mêmes dimensions que les images convoluées Xn et que les méta-images Zk. Chaque fonction ln est une fonction point à point, c'est-à-dire que pour chaque position c',l' dans le descripteur XTn, la valeur $XTn(c',l')$ est définie par la sortie binaire de la fonction ln en fonction des valeurs de pixel de même position dans les images convoluées Xn et dans les méta-images Zk, soit :

[Math 12]

$$XTn(c',l') = ln(X1(c',l'), ..., XN(c',l'), Z1(c',l'), ..., ZK(c',l'))$$

Les fonctions logiques ln peuvent être des fonctions à sortie binaire signée, ou des fonctions à sortie binaire non signée.

A titre d'exemple, dans le cas où l'étape 301 est mise en oeuvre conformément à l'exemple de la figure 4 et où, à l'étape 302, une unique méta-image Z1 est calculée comme défini aux équations Math 10 et Math 11 susmentionnées, les fonctions ln peuvent être définies comme suit (en notation booléenne) :

[Math 13]

$$XTn\backslash5(c',l') = ((X5(c',l') - Xn(c',l') \le 2)\&\&(Xn(c',l') \ge Z1(c',l')))$$

Et :

[Math 14]

$$XT5(c',l') = (X5(c',l') \ge 5)$$

Autrement dit, pour tout n sauf n=5, $XTn(c',l')$ est à un état haut si la différence $X5(c',l')$-$Xn(c',l')$ est inférieure ou égale à 2 et si la valeur $Xn(c',l')$ est supérieure ou égale à $Z1(c',l')$, et à un état bas dans le cas contraire. Pour n=5, $XT5(c',l')$ est à un état haut si la valeur $X5(c',l')$ est supérieure ou égale à 5, et à un état bas dans le cas contraire.

Le procédé de la figure 3 peut en outre comprendre une étape optionnelle 304 de regroupement, ou "pooling", visant à réduire les dimensions des descripteurs binaires. Plus particulièrement, lors de l'étape 304, chaque descripteur binaire XTn est divisé en une pluralité de groupes de pixels distincts, par exemple de mêmes dimensions. Pour chaque groupe de pixels, une unique valeur binaire est générée à partir des valeurs binaires des pixels du groupe au moyen d'une fonction de regroupement p. A partir de chaque descripteur binaire XTn de dimensions C'xL', on génère ainsi un descripteur binaire YTn de dimensions (C'/g)x(L'/h), g et h désignant respectivement la dimension dans la direction des colonnes et la dimension dans la direction des lignes des groupes de pixels auxquels est appliquée la fonction de regroupement p. La fonction de regroupement p consiste par exemple à sélectionner le maximum du groupe de pixels (fonction logique OU) .

A titre d'exemple, les sous-groupes de pixels sont des groupes de (g=8)x(l=8) pixels voisins. La fonction de regroupement p est par exemple une fonction de type maximum-médiane-maximum consistant, dans chaque groupe de 8x8 pixels, à :

- diviser le groupe en sous-groupes de 2x2 pixels voisins et conserver uniquement le maximum de chaque sous-groupe, de façon à obtenir une matrice de 4x4 valeurs binaires ;
- diviser la matrice de 4x4 valeurs binaires en sous-matrices de 2x2 valeurs binaires voisines et conserver uniquement un 1 logique si la sous-matrice comprend au moins deux valeurs à l'état 1, et un 0 logique si la sous-matrice comprend moins de deux valeurs à l'état 1, de façon à obtenir une matrice de 2x2 valeur binaires ; et

- conserver uniquement le maximum de la matrice de 2x2 valeurs binaires.

On notera que les étapes 301, 302, 303 et, le cas échéant 304, peuvent éventuellement être réitérées en réinjectant en entrée du circuit de traitement les descripteurs binaires XTn ou YTn ou une combinaison des descripteurs binaires XTn ou YTn (à la place des plans image binaires Is).

Le procédé de la figure 3 peut être réitéré à chaque nouvelle fourniture d'un plan image binaire Is par le capteur. Ainsi, pour chacun des S plans image binaires Is fournis par le capteur, on obtient N descripteurs XTn sous la forme de plans image binaires de dimensions C'xL' ou, le cas échant, N descripteurs YTn sous la forme de plans image binaires de dimensions (C'/g)x(L'/h).

Pour chaque indice n allant de 1 à N, les S descripteurs binaires XTn ou YTn de même indice n peuvent être intégrés numériquement, c'est-à-dire additionnés point à point, au fur et à mesure de leur fourniture par le circuit de traitement 200, de façon à obtenir, à l'issue de la phase d'acquisition, N descripteurs non binaires de dimensions C'xL' ou (C'/g)x(L'/h). Ces descripteurs non binaires peuvent ensuite être utilisés pour des applications d'analyse de scène diverses, par exemple des applications de détection d'éléments prédéterminés dans la scène et/ou pour mettre en oeuvre des opérations de classification.

A titre de variante, après chaque itération du procédé de la figure 3, une opération de projection des descripteurs binaires XTn ou YTn dans un espace de représentation plus adapté à l'application considéré peut être mise en oeuvre. A titre d'exemple, les descripteurs binaires XTn ou YTn sont concaténés en un vecteur X de dimension NxC'xL' ou en un vecteur Y de dimensions Nx(C'/g)x(L'/h). Le vecteur X ou Y est ensuite multiplié par une matrice de passage à coefficients binaires ou non binaires. La matrice de passage est par exemple générée par apprentissage de façon que le résultat de la multiplication soit un vecteur Vs mettant en exergue des caractéristiques particulières de la scène recherchées dans l'application considérée. Les S vecteurs Vs peuvent être intégrés numériquement, c'est-à-dire additionnés point à point, au fur et à mesure de leur fourniture par le circuit de traitement 200, de façon à obtenir, à l'issue de la phase d'acquisition, un vecteur descripteur V unique, pouvant par exemple être utilisé dans un processus de décision quant au classement de la portion correspondante de la scène vue par le capteur dans l'une parmi plusieurs classes prédéterminées.

Des exemples de procédé de traitement à la volée de flots binaires sont par exemple décrits dans les demandes de brevet EP3319311 et US20180124348 susmentionnées. On notera de plus que l'homme du métier saura décliner différentes variantes et topologies de réseaux de neurones en fonction du type de problème d'inférence à traiter.

Divers modes de réalisation et variantes ont été décrits. L'homme de l'art comprendra que certaines caractéristiques de ces divers modes de réalisation et variantes pourraient être combinées, et d'autres variantes apparaîtront à l'homme de l'art. En particulier, les modes de réalisation décrits ne se limitent pas aux exemples décrits ci-dessus de paramétrage du procédé de génération des descripteurs. En particulier, d'autres noyaux de convolution $\Omega n$ que ceux de l'exemple de la figure 4 peuvent être utilisés pour générer les images convoluées Xn. De plus, d'autres fonctions fk que celles décrites ci-dessus peuvent être utilisées pour générer les méta-images Zk. En outre, d'autres fonctions logiques ln que celles décrites ci-dessus peuvent être utilisées pour générer les descripteurs binaires XTn. Par ailleurs, d'autres fonctions de regroupement p que celles décrites ci-dessus peuvent être utilisées pour générer les descripteurs binaires à dimensions réduites YTn à partir des descripteurs binaires XTn. Plus généralement, l'homme du métier saura adapter le paramétrage du procédé de génération de descripteurs en fonction de l'application considérée.

Enfin, la mise en oeuvre pratique des modes de réalisation et variantes décrits est à la portée de l'homme du métier à partir des indications fonctionnelles données ci-dessus. En particulier, la réalisation du circuit de traitement 200 adapté à la mise en oeuvre du procédé de traitement décrit en relation avec la figure 3 est à la portée de l'homme du métier à partir des indications de la présente description.

**Revendications**

1. Système de génération de descripteurs d'une scène, comprenant :

    - un capteur d'images (100) comportant une pluralité de pixels (101), le capteur étant configuré pour, lors d'une phase d'acquisition, sélectionner successivement chaque pixel (101) un nombre S de fois sans réinitialiser un noeud de lecture du pixel entre la première et la dernière sélection, et, à chaque sélection du pixel, comparer un signal de sortie du pixel à un seuil de quantification et fournir une valeur binaire représentative du résultat de la comparaison, de façon à fournir successivement S plans image binaires (Is) comportant chacun une unique valeur binaire par pixel, S étant un entier supérieur ou égal à 2 ; et
    - un circuit de traitement (200) configuré pour, pour chaque plan image binaire (Is) fourni par le capteur (100), mettre en oeuvre les étapes successives suivantes :

a) calculer N convolutions du plan image binaire (Is) par respectivement N noyaux de convolution ($\Omega$n) distincts, de façon à fournir N images convoluées (Xn), N étant un entier supérieur ou égal à 2 ;

b) générer au moins une méta-image (Zk) à partir des N images convoluées (Xn) fournies à l'étape a) ; et

c) pour chacune des N images convoluées (Xn) fournies à l'étape a), générer un descripteur binaire (XTn) à partir de ladite image convoluée (Xn) et de ladite au moins une méta-image (Zk),

le circuit de traitement étant en outre configuré pour, à l'issue de la phase d'acquisition, mettre en oeuvre une étape d'analyse des N*S descripteurs binaires (XTn) générés,

le circuit de traitement (200) étant en outre configuré de façon que les N images convoluées (Xn) fournies à l'étape a) et ladite au moins une méta-image (Zk) générée à l'étape b) soient de mêmes dimensions, et que chaque valeur de pixel de ladite au moins une méta-image (Zk) soit égale au résultat d'une fonction statistique prenant pour entrées les N valeurs de pixels de même position dans les N images convoluées (Xn),

le circuit de traitement (200) étant en outre configuré de façon que les N descripteurs binaires (XTn) fournis à l'étape c) soient des images binaires de mêmes dimensions que les N images convoluées (Xn) fournies à l'étape a) et que ladite au moins une méta-image (Zk) générée à l'étape b),

dans lequel le circuit de traitement (200) est configuré de façon que, à l'étape c), le descripteur binaire (XTn) soit généré au moyen d'une fonction logique à sortie binaire à partir de ladite image convoluée (Xn) et de ladite au moins une méta-image (Zk),

et dans lequel le circuit de traitement (200) est configuré de façon que, pour chacun des N des descripteurs binaires (XTn) fournis à l'étape c), chaque valeur de pixel du descripteur binaire (XTn) soit égale au résultat de ladite fonction logique à sortie binaire, ladite fonction logique recevant en entrée uniquement des valeurs du groupe comprenant les N valeurs de pixels de même position dans les N images convoluées (Xn) et la valeur de pixel de même position dans ladite au moins une méta-image (Zk).

2. Système selon la revendication 1, dans lequel le circuit de traitement (200) est configuré de façon que ladite fonction statistique comprenne au moins une fonction du groupe comprenant le maximum, la moyenne, la médiane, le minimum et l'écart type.

3. Système selon la revendication 1 ou 2, dans lequel le circuit de traitement (200) est en outre configuré pour, à chaque plan image binaire (Is) fourni par le capteur (100), après l'étape c), mettre en oeuvre l'étape suivante :

d) pour chacun des N descripteur binaire (XTn), appliquer au descripteur une fonction de regroupement de façon à générer un descripteur binaire (YTn) de dimensions réduites.

4. Système selon l'une quelconque des revendications 1 à 3, dans lequel le circuit de traitement (200) est configuré pour, à l'issue de l'étape c), réitérer les étapes a), b) et c) en remplaçant le plan image binaire (Is) d'entrée par un ou une combinaison de tout ou partie des descripteurs binaires (XTn) générés à l'étape c).

5. Système selon la revendication 4, dans lequel le circuit de traitement (200) est configuré pour, à l'issue de l'étape d), réitérer les étapes a), b) et c) en remplaçant le plan image binaire (Is) d'entrée par un ou une combinaison de tout ou partie des descripteurs binaires de dimensions réduites (YTn) générés à l'étape d).

6. Système selon l'une quelconque des revendications 1 à 5, dans lequel les pixels (101) du capteur (100) sont agencés en matrice selon des rangées et des colonnes, le capteur (100) comprenant en outre un circuit de commande (103) configuré pour sélectionner successivement les pixels, ligne par ligne, selon un procédé de commande de type à obturation déroulante.

7. Système selon la revendication 6, dans lequel le circuit de commande (103) du capteur (100) comprend en outre un circuit de quantification (103(b)) adapté à comparer un signal de sortie de chaque pixel de la ligne sélectionnée à un seuil et à fournir une valeur binaire de sortie représentative du résultat de la comparaison.

8. Procédé de génération, au moyen d'un circuit de traitement (200), de descripteurs d'une scène captée par un capteur d'images (100) comportant une pluralité de pixels (101), le capteur étant configuré pour, lors d'une phase d'acquisition, sélectionner successivement chaque pixel (101) un nombre S de fois sans réinitialiser un noeud de lecture du pixel entre la première et la dernière sélection, et, à chaque sélection du pixel, comparer un signal de sortie du pixel à un seuil de quantification et fournir une valeur binaire représentative du résultat de la comparaison, de façon à fournir successivement S plans image binaires (Is) comportant chacun une unique valeur binaire par pixel, S étant un entier supérieur ou égal à 2, le procédé comportant les étapes successives suivantes :

a) calculer N convolutions du plan image binaire (Is) par respectivement N noyaux de convolution (Ωn) distincts, de façon à fournir N images convoluées (Xn), N étant un entier supérieur ou égal à 2 ;

b) générer au moins une méta-image (Zk) à partir des N images convoluées (Xn) fournies à l'étape a) ; et

c) pour chacune des N images convoluées (Xn) fournies à l'étape a), générer un descripteur binaire (XTn) à partir de ladite image convoluée (Xn) et de ladite au moins une méta-image

le procédé comprenant en outre, à l'issue de la phase d'acquisition, une étape d'analyse des N*S descripteurs binaires (XTn) générés,

dans lequel les N images convoluées (Xn) fournies à l'étape a) et ladite au moins une méta-image (Zk) générée à l'étape b) sont de mêmes dimensions, et chaque valeur de pixel de ladite au moins une méta-image (Zk) est égale au résultat d'une fonction statistique prenant pour entrées les N valeurs de pixels de même position dans les N images convoluées (Xn),

le circuit de traitement (200) est configuré de façon que les N descripteurs binaires (XTn) fournis à l'étape c) sont des images binaires de mêmes dimensions que les N images convoluées (Xn) fournies à l'étape a) et que ladite au moins une méta-image (Zk) générée à l'étape b),

dans lequel le circuit de traitement (200) est configuré de façon que, à l'étape c), le descripteur binaire (XTn) soit généré au moyen d'une fonction logique à sortie binaire à partir de ladite image convoluée (Xn) et de ladite au moins une méta-image (Zk),

et dans lequel le circuit de traitement (200) est configuré de façon que, pour chacun des N des descripteurs binaires (XTn) fournis à l'étape c), chaque valeur de pixel du descripteur binaire (XTn) soit égale au résultat de ladite fonction logique à sortie binaire, ladite fonction logique recevant en entrée uniquement des valeurs du groupe comprenant les N valeurs de pixels de même position dans les N images convoluées (Xn) et la valeur de pixel de même position dans ladite au moins une méta-image (Zk).

**Patentansprüche**

1. Ein System zum Generieren von Deskriptoren einer Szene, aufweisend:

   - einen Bildsensor (100) mit einer Vielzahl von Pixeln (101), wobei der Sensor konfiguriert ist, während einer Erfassungsphase, zum aufeinanderfolgenden Auswählen jedes Pixels (101) eine Anzahl S von Malen, ohne einen Abtastknoten des Pixels zwischen der ersten Auswahl und der letzten Auswahl zurückzusetzen, und bei jeder Auswahl des Pixels, zum Vergleichen eines Ausgangssignals des Pixels mit einem Quantisierungsschwellenwert und zum Bereitstellen eines Binärwerts, der repräsentativ für das Ergebnis des Vergleichs ist, um nacheinander S Binärbildebenen (Is) bereitzustellen, die jeweils einen einzelnen Binärwert pro Pixel umfassen, wobei S eine ganze Zahl größer oder gleich 2 ist; und

   - eine Verarbeitungsschaltung (200), die konfiguriert ist zum Ausführen, für jede vom Sensor (100) bereitgestellte Binärbildebene (Is), und zwar der folgenden aufeinanderfolgenden Schritte:

     a) Berechnen von N Faltungen der Binärbildebenen (Is) durch jeweils N unterschiedliche Faltungskerne (Ωn), um N gefaltete Bilder (Xn) bereitzustellen, wobei N eine ganze Zahl größer oder gleich 2 ist;

     b) Generieren wenigstens eines Metabildes (Zk) aus den N gefalteten Bildern (Xn), die in Schritt a) bereitgestellt wurden; und

     c) für jedes der N gefalteten Bilder (Xn), die in Schritt a) bereitgestellt wurden, Generieren eines Binärdeskriptors (XTn) aus dem gefalteten Bild (Xn) und dem wenigstens einen Metabild (Zk),

   wobei die Verarbeitungsschaltung ferner konfiguriert ist zum Implementieren, am Ende der Erfassungsphase, und zwar eines Schritts zum Analysieren der erzeugten N*S Binärdeskriptoren (XTn),

   wobei die Verarbeitungsschaltung (200) ferner konfiguriert ist, so dass die N gefalteten Bilder (Xn), die in Schritt a) bereitgestellt werden, und wobei das wenigstens eine Metabild (Zk), das in Schritt b) generiert wird, die gleichen Abmessungen haben und dass jeder Pixelwert des wenigstens einen Metabildes (Zk) gleich dem Ergebnis einer statistischen Funktion ist, die als Eingänge die N Pixelwerte der gleichen Position in den N gefalteten Bildern (Xn) hat,

   wobei die Verarbeitungsschaltung (200) ferner konfiguriert ist, so dass die N Binärdeskriptoren (XTn), die in Schritt c) bereitgestellt werden, Binärbilder mit denselben Abmessungen wie die N gefalteten Bilder (Xn) sind, die in Schritt a) bereitgestellt werden, und wobei das wenigstens eine Metabild (Zk), das in Schritt b) generiert wird,

   wobei die Verarbeitungsschaltung (200) konfiguriert ist, so dass in Schritt c) der Binärdeskriptor (XTn) generiert wird mittels einer Binär-Ausgangs-Logikfunktion aus dem gefalteten Bild (Xn) und dem wenigstens einen Metabild (Zk),

und wobei die Verarbeitungsschaltung (200) konfiguriert ist, so dass für jeden der N Binärdeskriptoren (XTn), die in Schritt c) bereitgestellt werden, jeder Pixelwert des Binärdeskriptors (XTn) gleich dem Ergebnis einer Binär-Ausgangs-Logikfunktion ist, wobei die Logikfunktion als Eingang nur Werte aus der folgenden Gruppe empfängt, die N Pixelwerte derselben Position in den N gefalteten Bildern (Xn) und der Pixelwert derselben Position in dem wenigstens einen Metabild (Zk).

2. Das System nach Anspruch 1, wobei die Verarbeitungsschaltung (200) konfiguriert ist, so dass die statistische Funktion wenigstens eine statistische Funktion aus der folgenden Gruppe aufweist: Maximum, Mittelwert, Median, Minimum und Standardabweichung.

3. Das System nach Anspruch 1 oder 2, wobei die Verarbeitungsschaltung (200) ferner konfiguriert ist zum Implementieren, bei jeder Binärbildebene (Is), die von dem Sensor (100) bereitgestellt wird, nach Schritt c), und zwar des folgenden Schritts:
d) für jeden der N Binärdeskriptoren (XTn), Anwenden einer Gruppierungsfunktion auf den Deskriptor, um einen Binärdeskriptor (YTn) mit reduzierten Dimensionen zu generieren.

4. Das System nach einem der Ansprüche 1 bis 3, wobei die Verarbeitungsschaltung (200) konfiguriert ist zum Wiederholen, am Ende von Schritt c), und zwar der Schritte a), b) und c), durch Ersetzen der eingegebenen Binärbildebene (Is) durch einen oder eine Kombination aus allen oder einem Teil der Binärdeskriptoren (XTn), die in Schritt c) erzeugt wurden.

5. Das System nach Anspruch 4, wobei die Verarbeitungsschaltung (200) konfiguriert ist zum Wiederholen, am Ende von Schritt d), und zwar der Schritte a), b) und c), durch Ersetzen der eingegebenen Binärbildebene (Is) durch einen oder eine Kombination aus allen oder einem Teil der dimensions-reduzierten Binärdeskriptoren (YTn), die in Schritt d) erzeugt wurden.

6. Das System nach einem der Ansprüche 1 bis 5, wobei die Pixel (101) des Sensors (100) in einer Matrix nach Zeilen und Spalten angeordnet sind, wobei der Sensor (100) ferner eine Steuerschaltung (103) aufweist, die konfiguriert ist, zum aufeinanderfolgenden Auswählen der Pixel, Zeile für Zeile, gemäß einem Rolling-Shutter-Steuerverfahren.

7. Das System nach Anspruch 6, wobei die Steuerschaltung (103) des Sensors (100) ferner eine Quantisierungsschaltung (103(b)) aufweist, die geeignet ist zum Vergleichen eines Ausgangssignals jedes Pixels der ausgewählten Zeile mit einem Schwellenwert und zum Bereitstellen eines binären Ausgangswerts, der das Ergebnis des Vergleichs repräsentiert.

8. Ein Verfahren zum Erzeugen, mittels einer Verarbeitungsschaltung (200), von Deskriptoren einer Szene, die von einem Bildsensor (100) erfasst wird, der eine Vielzahl von Pixeln (101) umfasst, wobei der Sensor so konfiguriert zum aufeinanderfolgenden Auswählen, während einer Erfassungsphase, und zwar jedes Pixels (101) eine Anzahl S von Malen, ohne einen Abtastknoten des Pixels zwischen der ersten Auswahl und der letzten Auswahl zurückzusetzen, und bei jeder Auswahl des Pixels, zum Vergleichen eines Ausgangssignals des Pixels mit einem Quantisierungsschwellenwert und zum Bereitstellen eines Binärwerts, der repräsentativ für das Ergebnis des Vergleichs ist, um nacheinander S Binärbildebenen (Is) bereitzustellen, die jeweils einen einzelnen Binärwert pro Pixel umfassen, wobei S eine ganze Zahl größer oder gleich 2 ist, wobei das Verfahren die folgenden aufeinanderfolgenden Schritte aufweist:

a) Berechnen von N Faltungen der Binärbildebenen (Is) durch jeweils N unterschiedliche Faltungskerne ($\Omega$n), um N gefaltete Bilder (Xn) bereitzustellen, wobei N eine ganze Zahl größer oder gleich 2 ist;
b) Generieren wenigstens eines Metabildes (Zk) aus den N gefalteten Bildern (Xn), die in Schritt a) bereitgestellt wurden; und
c) für jedes der N gefalteten Bilder (Xn), die in Schritt a) bereitgestellt wurden, Generieren eines Binärdeskriptors (XTn) aus dem gefalteten Bild (Xn) und dem wenigstens einen Metabild (Zk),
wobei das Verfahren ferner einen Schritt aufweist, am Ende der Erfassungsphase, und zwar zum Analysieren der erzeugten N*S Binärdeskriptoren (XTn),
wobei die N gefalteten Bilder (Xn), die in Schritt a) bereitgestellt werden, und wobei das wenigstens eine Metabild (Zk), das in Schritt b) generiert wird, die gleichen Abmessungen haben und jeder Pixelwert des wenigstens einen Metabildes (Zk) gleich dem Ergebnis einer statistischen Funktion ist, die als Eingänge die N Pixelwerte der gleichen Position in den N gefalteten Bildern (Xn) hat,
wobei die Verarbeitungsschaltung (200) ferner konfiguriert ist, so dass die N Binärdeskriptoren (XTn), die in Schritt c) bereitgestellt werden, Binärbilder mit denselben Abmessungen wie die N gefalteten Bilder (Xn) sind, die in Schritt a) bereitgestellt werden, und das wenigstens eine Metabild (Zk), das in Schritt b) generiert wird, wobei die Verarbeitungsschaltung (200) konfiguriert ist, so dass in Schritt c) der Binärdeskriptor (XTn) generiert wird mittels einer Binär-Ausgangs-Logikfunktion aus dem gefalteten Bild (Xn) und dem wenigstens einen Metabild (Zk),

und wobei die Verarbeitungsschaltung (200) konfiguriert ist, so dass für jeden der N Binärdeskriptoren (XTn), die in Schritt c) bereitgestellt werden, jeder Pixelwert des Binärdeskriptors (XTn) gleich dem Ergebnis einer Binär-Ausgangs-Logikfunktion ist, wobei die Logikfunktion als Eingang nur Werte aus der folgenden Gruppe empfängt, die N Pixelwerte derselben Position in den N gefalteten Bildern (Xn) und der Pixelwert derselben Position in dem wenigstens einen Metabild (Zk).

**Claims**

1. System for generating descriptors of a scene, comprising:

   - an image sensor (100) including a plurality of pixels (101), the sensor being configured to, during an acquisition phase, consecutively select each pixel (101) a number S of times without resetting a sense node of the pixel between the first selection and the last selection, and at each selection of the pixel, compare an output signal from the pixel with a quantization threshold, and provide a binary value representative of the result of the comparison, so as to consecutively provide S binary image planes (Is) each including a single binary value per pixel, S being an integer greater than or equal to 2; and
   - a processing circuit (200) configured to, for each binary image plane (Is) provided by the sensor (100), implement the following consecutive steps:

     a) calculating N convolutions of the binary image plane (Is) by respectively N distinct convolution kernels (Ωn), so as to provide N convolved images (Xn), N being an integer greater than or equal to 2;
     b) generating at least one meta-image (Zk) from the N convolved images (Xn) provided in step a); and
     c) for each of the N convolved images (Xn) provided in step a), generating a binary descriptor (XTn) from said convolved image (Xn) and said at least one meta-image (Zk),

   the processing circuit being further configured to at the end of the acquisition phase, implement a step for analysing the generated N*S binary descriptors (XTn),
   the processing circuit (200) being further configured so that the N convolved images (Xn) provided in step a) and said at least one meta-image (Zk) generated in step b) are of the same dimensions, and that each pixel value of said at least one meta-image (Zk) is equal to the result of a statistical function having as inputs the N pixel values of the same position in the N convolved images (Xn),
   the processing circuit (200) being further configured so that the N binary descriptors (XTn) provided in step c) are binary images of the same dimensions as the N convolved images (Xn) provided in step a) and that said at least one meta-image (Zk) generated in step b),
   wherein the processing circuit (200) is configured so that, in step c), the binary descriptor (XTn) is generated by means of a binary-output logic function from said convolved image (Xn) and said at least one meta-image (Zk), and wherein the processing circuit (200) is configured so that, for each of the N binary descriptors (XTn) provided in step c), each pixel value of the binary descriptor (XTn) is equal to the result of a binary-output logic function, said logic function receiving as input only values from the group comprising the N pixel values of the same position in the N convolved images (Xn) and the pixel value of the same position in said at least one meta-image (Zk).

2. The system according to claim 1, wherein the processing circuit (200) is configured so that said statistical function comprises at least one statistical function from the group comprising maximum, mean, median, minimum and standard deviation.

3. The system according to claim 1 or 2, wherein the processing circuit (200) is further configured to, at each binary image plane (Is) provided by the sensor (100), after step c), implement the following step:
   d) for each of the N binary descriptors (XTn), applying a grouping function to the descriptor so as to generate a binary descriptor (YTn) of reduced dimensions.

4. System according to any one according to claims 1 to 3, wherein the processing circuit (200) is configured to, at the end of step c), repeat steps a), b) and c) by replacing the input binary image plane (Is) with one or a combination of all or part of the binary descriptors (XTn) generated in step c).

5. The system according to claim 4, wherein the processing circuit (200) is configured to, at the end of step d), repeat steps a), b) and c) by replacing the input binary image plane (Is) with one or a combination of all or part of the reduced-dimensional binary descriptors (YTn) generated in step d).

6. System according to any one according to claims 1 to 5, wherein the pixels (101) of the sensor (100) are arranged in a matrix according to rows and columns, the sensor (100) further comprising a control circuit (103) configured to consecutively select the pixels, line by line, according to a rolling shutter type control method.

7. The system according to claim 6, wherein the control circuit (103) of the sensor (100) further comprises a quantization circuit (103(b)) suitable for comparing an output signal of each pixel of the selected line to a threshold and to provide a binary output value representative of the result of the comparison.

8. Method for generating, by means of a processing circuit (200), descriptors of a scene captured by an image sensor (100) including a plurality of pixels (101), the sensor being configured to, during an acquisition phase, successively select each pixel (101) a number S of times without resetting a sense node of the pixel between the first selection and the last selection, and at each selection of the pixel, compare an output signal from the pixel with a quantization threshold, and provide a binary value representative of the result of the comparison, so as to consecutively provide S binary image planes (Is) each including a single binary value per pixel, S being an integer greater than or equal to 2, the method including the following successive steps:

a) calculating N convolutions of the binary image plane (Is) by respectively N distinct convolution kernels ($\Omega n$), so as to provide N convolved images (Xn), N being an integer greater than or equal to 2;
b) generating at least one meta-image (Zk) from the N convolved images (Xn) provided in step a); and
c) for each of the N convolved images (Xn) provided in step a), generating a binary descriptor (XTn) from said convolved image (Xn) and said at least one meta-image,
the method further comprising at the end of the acquisition phase, a step for analysing the generated N*S binary descriptors (XTn),
wherein the N convolved images (Xn) provided in step a) and said at least one meta-image (Zk) generated in step b) are of the same dimensions, and each pixel value of said at least one meta-image (Zk) is equal to the result of a statistical function having as inputs the N pixel values of the same position in the N convolved images (Xn),
the processing circuit (200) being configured so that the N binary descriptors (XTn) provided in step c) are binary images of the same dimensions as the N convolved images (Xn) provided in step a) and that said at least one meta-image (Zk) generated in step b),
wherein the processing circuit (200) is configured so that, in step c), the binary descriptor (XTn) is generated by means of a binary-output logic function from said convolved image (Xn) and said at least one meta-image (Zk), and wherein the processing circuit (200) is configured so that, for each of the N binary descriptors (XTn) provided in step c), each pixel value of the binary descriptor (XTn) is equal to the result of a binary-output logic function, said logic function receiving as input only values from the group comprising the N pixel values of the same position in the N convolved images (Xn) and the pixel value of the same position in said at least one meta-image (Zk).

Fig 1

Fig 2

Fig 3

Fig 4

## EP 3 764 283 B1

**Documents brevets cités dans la description**

- EP 3319311 A
- US 20180124348 A
- EP 3428851 A